# EUROPÄISCHE PATENTSCHRIFT

(11) **EP 3 402 992 B1**
(45) Veröffentlichungstag und Bekanntmachung des Hinweises auf die Patenterteilung: **24.02.2021**
(21) Anmeldenummer: 16805725.5
(22) Anmeldetag: 01.12.2016
(51) Int. Cl.: F16B 7/18, F16B 37/04

(54) **BEFESTIGUNGSANORDNUNG**
FASTENING ARRANGEMENT
SYSTÈME DE FIXATION

(30) Priorität: 14.01.2016 DE 102016100550
(43) Veröffentlichungstag der Anmeldung: 21.11.2018
(73) Patentinhaber: fischerwerke GmbH & Co. KG, 72178 Waldachtal (DE)
(72) Erfinder: FÖRMER, Thomas, 72160 Horb a.N. (DE)
(86) Internationale Anmeldenummer: PCT/EP2016/002021
(87) Internationale Veröffentlichungsnummer: WO 2017/121440

(56) Entgegenhaltungen:
- EP-A1- 2 500 587
- EP-A1- 2 500 587
- DE-A1- 19 912 474
- DE-A1- 19 912 474
- DE-U1-202012 007 790
- DE-U1-202012 007 790
- US-A1- 2008 229 699
- US-A1- 2008 229 699

## Beschreibung

Die Erfindung betrifft eine Befestigungsanordnung mit den Merkmalen des Oberbegriffs des Anspruchs 1.

Gattungsgemäße Befestigungsanordnungen kommen insbesondere in der Installationstechnik zur Anwendung, beispielsweise beim Verlegen von Ver- und Entsorgungsleitungen, wie Wasser- und Lüftungsleitungen in Gebäuden. Derartige Befestigungsanordnungen bestehen aus mehreren Montageschienen, die an einem tragenden Bauteil befestigt und mit einem Verbindungselement miteinander verbunden sind. Das tragende Bauteil ist beispielsweise eine Decke oder eine Wand eines Gebäudes. Eine Montageschiene weist im Regelfall einen rechteckigen Querschnitt und auf einer Seite einen Montageschlitz auf, der sich über die Länge der Montageschiene erstreckt. Der Montageschlitz dient zur Aufnahme von Befestigungselementen, mit denen beispielsweise das Verbindungselement an den Montageschienen befestigt wird.

Aus der Patentanmeldung US 2008/0229699 A1 ist eine gattungsgemäße Befestigungsanordnung bekannt. Die Befestigungsanordnung umfasst eine erste Montageschiene, die mittels eines Verbindungselements mit einer zweiten Montageschiene verbunden ist. Das Verbindungselement besteht aus einem flachen Blech, das an seiner der Montageschiene zugewandten Anlagefläche Haltevorsprünge aufweist, die in Montageschlitze der Montageschienen eingreifen. Die Haltevorsprünge sind, bezogen auf die Breite des Verbindungselements, mittig angeordnet und dienen zur Lagesicherung des Verbindungselements an den Montageschienen.

Aufgabe der Erfindung ist, eine alternative Befestigungsanordnung vorzuschlagen, die variabel in der Anwendung ist und eine hohe Stabilität aufweist.

Diese Aufgabe wird erfindungsgemäß durch eine Befestigungsanordnung mit den Merkmalen des Anspruchs 1 gelöst. Die erfindungsgemäße Befestigungsanordnung umfasst eine erste Montageschiene, eine zweite Montageschiene und ein Verbindungselement zum Verbinden der ersten Montageschiene mit der zweiten Montageschiene. Die Montageschienen weisen jeweils zwei Seitenwände auf, zwischen denen jeweils ein Montageschlitz ausgebildet ist, der sich jeweils entlang einer Schienenlängsachse erstreckt. Insbesondere sind die beiden Seitenwände jeweils durch eine Rückwand miteinander verbunden, so dass durch die Seitenwände und die Rückwand ein U-förmiger Querschnitt entsteht und die der Rückwand abgewandten Enden der Seitenwände auf der Vorderseite den Montageschlitz begrenzen. Insbesondere verläuft der Montageschlitz über die gesamte Länge der Montageschiene insbesondere geradlinig, wobei der Montageschlitz durch einzelne Verstärkungsstege zwischen den Seitenwänden unterbrochen sein kann. Insbesondere sind auf der Vorderseite an den Seitenwänden zwei den Schlitz begrenzende Vorderwandabschnitte ausgebildet, die als Kragarme von den Seitenwänden abstehen, insbesondere parallel zur Rückwand verlaufen und aufeinander zu gerichtet sind. An den Vorderwandabschnitten können zudem Randabschnitte ausgebildet sein, die nach innen, in den durch die Wände umschlossenen Aufnahmeraum der Montageschiene, gerichtet sind. Insbesondere ist die lichte Weite des Montageschlitzes der ersten Montageschiene gleich der lichten Weite des Montageschlitzes der zweiten Montageschiene. Insbesondere weisen die beiden Montageschienen den gleichen Querschnitt auf. Die "lichte Weite" eines Montageschlitzes ist die orthogonal zur Schienenlängsachse gemessene Weite der Öffnung des Montageschlitzes, durch die ein Befestigungselement in den Aufnahmeraum eingebracht werden kann. Als Befestigungselement zum Befestigen des Verbindungselements an einer Montagschiene kann beispielsweise eine Hammerkopfmutter verwendet werden, in die eine Schraube eingeschraubt wird, mit der das Verbindungselement gegen die Montageschiene verspannt werden kann. Alternativ erfolgt die Befestigung beispielsweise mit einem Durchsteckelement, wie es beispielsweise aus der Offenlegungsschrift DE 199 12 474 A1 bekannt ist. Das Verbindungselement weist einen, insbesondere aus einem flachen Blech geformten Grundkörper auf, mit einer Anlagefläche zur Anlage an den Montageschienen. Die Anlagefläche des Grundkörpers kann als Gesamtes flächig eben sein. Alternativ kann der Grundkörper beispielsweise zwei zueinander geneigte Winkelflächen aufweisen, die insbesondere jede für sich Teile der Anlagefläche aufweisen. Insbesondere sind diese Winkelflächen rechtwinklig zueinander orientiert, so dass in diesem Fall der Grundkörper einen Verbindungswinkel bildet. Am Grundkörper sind mindestens zwei Haltevorsprünge angeordnet. Die Haltevorsprünge stehen in Richtung zur Montageschiene hin über die Anlagefläche über. Die Haltevorsprünge sichern das Verbindungselement gegen eine Verschiebung quer zu mindestens einem der Montageschlitze.

Erfindungsgemäß sind die Haltevorsprünge paarweise am Grundkörper angeordnet und bilden mindestens ein erstes Paar. Die Haltevorsprünge sind insbesondere an den Längsseiten des Grundkörpers des Verbindungselements angeordnet, wobei zwei ein Paar bildende Haltevorsprünge an gegenüberliegenden Längsseiten angeordnet sind. Insbesondere stehen die Haltevorsprünge von den Längsseiten des Grundkörpers ab, wobei die Längsseiten die längeren der Flächen des Grundkörpers sind. "Paarweise" meint hier, dass immer zwei Haltevorsprünge derart am Grundkörper angeordnet sind, dass sie gemeinsam in Wirkverbindung mit einer der beiden Montageschienen treten können. Die Haltevorsprünge sind derart ausgebildet, dass der Abstand zwischen den Haltevorsprüngen des ersten Paares größer als die orthogonal zur Schienenlängsrichtung der ersten Montageschiene gemessene lichte Weite des Montageschlitzes der ersten Montageschiene ist, und dass die orthogonal zum Abstand gemessene Länge der Haltevorsprünge des ersten Paares gleich der orthogonal zur Schienenlängsrichtung der zweiten Montageschiene gemessenen lichten Weite des Montageschlitzes der ersten Montageschiene ist. Insbesondere entspricht der Abstand zwischen den Haltevorsprüngen der Breite der Montageschiene, so dass die Haltevorsprünge an den Außenseiten der Seitenwände anliegen. Alternativ, sofern an den Außenseiten der Seitenwände eine Anlagekontur für die Haltevorsprünge ausgebildet ist, ist der Abstand zwischen den Haltevorsprüngen derart gewählt, dass die Haltevorsprünge an der Anlagekontur und/oder der Seitenwand anliegen.

Eine Befestigungsanordnung mit einem erfindungsgemäß ausgebildeten Verbindungselement erlaubt eine variable Verwendung des Verbindungselements zur Ausbildung der erfindungsgemäßen Befestigungsanordnung unter Ausbildung einer stabilen und insbesondere drehfesten Verbindung. Das Verbindungselement kann einerseits außen an einer Montagschiene oder andererseits orthogonal dazu innen, im Montageschlitz der Montagsschiene anliegen.

Vorzugsweise ist am Grundkörper des Verbindungselements ein zweites Paar Haltevorsprünge angeordnet, derart, dass der Abstand zwischen den Haltevorsprüngen des zweiten Paares größer als die orthogonal zur Schienenlängsrichtung der zweiten Montageschiene gemessene lichte Weite des Montageschlitzes der zweiten Montageschiene ist. Insbesondere entspricht der Abstand zwischen den Haltevorsprüngen des zweiten Paares der Breite der zweiten Montageschiene, so dass diese Haltevorsprünge an den Außenseiten der Seitenwände der zweiten Montageschiene anliegen. Alternativ, sofern an den Außenseiten der Seitenwände der zweiten Montageschiene eine Anlagekontur für die Haltevorsprünge ausgebildet ist, ist der Abstand zwischen den Haltevorsprüngen derart gewählt, dass die Haltevorsprünge an der Anlagekontur und/oder der Seitenwand anliegen.

Zudem oder alternativ kann in einer weiteren bevorzugten Ausgestaltungsform der erfindungsgemäßen Befestigungsanordnung das zweite Paar Haltevorsprünge derart gestaltet sein, dass die orthogonal zum Abstand gemessene Länge der Haltevorsprünge des zweiten Paares gleich der orthogonal zur Schienenlängsrichtung der zweiten Montageschiene gemessenen lichten Weite des Montageschlitzes der zweiten Montageschiene ist.

Insbesondere sind die beiden Paare Haltevorsprünge gleich ausgebildet.

Aufgrund der Ausbildung der Haltevorsprünge kann das Verbindungselement vielseitig zur Verbindung von Montagschienen eingesetzt werden, so dass die Ausbildung verschiedenster erfindungsgemäßer Befestigungsanordnungen möglich ist:
So kann bei einer bevorzugten Ausgestaltungsform der erfindungsgemäßen Befestigungsanordnung das erste Paar Haltevorsprünge außen an den Seitenwänden der ersten Montageschiene anliegen und das zweite Paar Haltevorsprünge außen an den Seitenwänden der zweiten Montageschiene. Alternativ kann das erste Paar Haltevorsprünge in den Montageschlitz der ersten Montageschiene eingreifen und das zweite Paar Haltevorsprünge in den Montageschlitz der zweiten Montageschiene. Oder das erste Paar Haltevorsprünge kann in den Montageschlitz der ersten Montageschiene eingreifen und das zweite Paar Haltevorsprünge außen an den Seitenwänden der zweiten Montageschiene anliegen.

Damit ein Haltevorsprung flächig an einer Seitenwand anliegen kann, ist an der Seitenwand vorzugsweise eine zu dem Haltevorsprung komplementäre Anlagekontur ausgebildet. Insbesondere ist die Anlagekontur auf der Außenfläche der Seitenwand, insbesondere auf den Außenflächen beider Seitenwände einer Montageschiene, ausgebildet. Dabei ist insbesondere der Abstand der Haltevorsprünge auf den Abstand der Anlagekonturen der beiden Seitenflächen abgestimmt und insbesondere gleich diesem Abstand.

Insbesondere sind die Haltevorsprünge lang gestreckt und weisen eine Dicke auf, die der Dicke des Grundkörpers entspricht.

Die Erfindung wird nachfolgend anhand von fünf in den Figuren dargestellten Ausführungsbeispielen näher erläutert.

Es zeigen:
- Figur 1: eine erste erfindungsgemäße Befestigungsanordnung mit zwei axial hintereinander angeordneten Montageschienen in einer perspektivischen Draufsicht;
- Figur 2: einen Schnitt durch die erste Befestigungsanordnung der Figur 1 in der Schnittebene II-II;
- Figur 3: eine zweite erfindungsgemäße Befestigungsanordnung mit zwei parallel zueinander ausgerichteten Montageschienen in einer perspektivischen Ansicht;
- Figur 4: eine dritte erfindungsgemäße Befestigungsanordnung mit zwei orthogonal zueinander ausgerichteten Montageschienen in einer perspektivischen Ansicht;
- Figur 5: eine vierte erfindungsgemäße Befestigungsanordnung mit einer ersten Winkelverbindung in einer perspektivischen Ansicht; und
- Figur 6: eine fünfte erfindungsgemäße Befestigungsanordnung in einer zweiten Winkelverbindung in einer perspektivischen Ansicht.

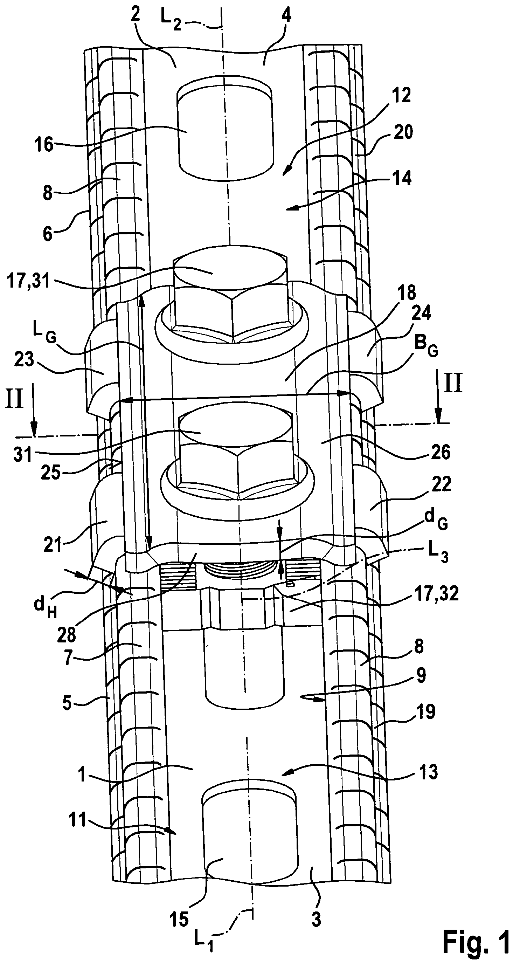

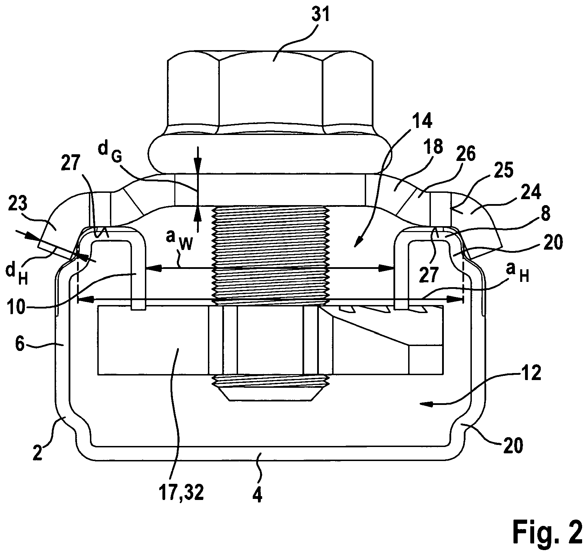

Die in den Figuren 1 und 2 dargestellte erste erfindungsgemäße Befestigungsanordnung umfasst eine erste Montageschiene 1 und eine zweite Montageschiene 2. Die Montageschienen 1, 2 sind gleich, d.h. sie weisen beide den gleichen rechteckförmigen Querschnitt auf, der aus einer ebenen Rückwand 3, 4, Seitenwänden 5, 6, die orthogonal zur jeweiligen Rückwand 3, 4 verlaufen, und zur jeweiligen Rückwand 3, 4 parallelen Vorderwandabschnitten 7, 8 gebildet wird. An den Vorderwandabschnitten 7, 8 sind Randabschnitte 9, 10 angeordnet, die parallel zu den Seitenwänden 5, 6 verlaufen, in den Aufnahmeraum 11, 12 der jeweiligen Montageschiene 1, 2 ragen und jeweils einen Montageschlitz 13, 14 begrenzen. Die Montageschlitze 13, 14 erstrecken sich entlang der Schienenlängsachsen L₁, L₂ über die gesamte Länge der jeweiligen Montageschiene 1, 2. Die Rückwände 3, 4 weisen langlochartige Öffnungen 15, 16 auf, durch die, wie auch durch die Montageschlitze 13, 14, Befestigungselemente 17 in die Aufnahmeräume 11, 12 eingebracht werden können, um ein Verbindungselement 18 an den Montageschienen 1, 2 zu befestigen. Die Befestigungselemente 17 bestehen hier jeweils aus zwei Teilen: einer Schraube 31, die in eine Hammerkopfmutter 32 eingeschraubt ist. Die Hammerkopfmutter 32 liegt, wie dies in Figur 2 zu sehen ist, an den Randabschnitten 9, 10 an, und ist mittels der Schraube 31 gegen das Verbindungselement 18 verspannt. An den Verbindungsstellen der Seitenwände 5, 6 zu der jeweiligen Rückwand 3, 4 und zu den jeweiligen Vorderwandabschnitten 7, 8 der Montageschienen 1, 2 sind an den Seitenwänden 5, 6 in den jeweiligen Aufnahmeraum 11, 12 gekrümmte Anlagekonturen 19, 20 ausgebildet, die sich parallel zu den Längsachsen L₁, L₂ über die Länge der Montageschienen 1, 2 erstrecken und deren Kontur auf der dem jeweiligen Aufnahmeraum 11, 12 abgewandten Außenseite der Seitenwände 5, 6 komplementär zu Haltevorsprüngen 21, 22, 23, 24 ist, die das Verbindungselement 18 aufweist.

Das Verbindungselement 18 verbindet die beiden Montageschienen 1, 2 zug- und drehfest, wobei durch die Anlage der Haltevorsprünge 21, 22, 23, 24 an den Anlagekonturen 19, 20 eine stabile Verbindung der beiden Montageschienen 1, 2 besteht. Die Haltevorsprünge 21, 22, 23, 24, die einen Teil des Verbindungselements 18 bilden und in Richtung zu den Montageschienen 1, 2 hin über eine Anlagefläche 27 überstehen, sind an den Längsseiten 25 eines Grundkörpers 26 des Verbindungselements 18 angeordnet, die sich parallel zu einer Längsachse L₃ des Verbindungselements 18 erstrecken. Der Grundkörper 26 ist rechteckförmig und weist eine parallel zur Längsachse L₃ gemessene Länge L_{G} auf, die größer als seine Breite B_{G} ist. Die Dicke d_{G} des Grundkörpers 26 entspricht der Dicke d_{H} der Haltevorsprünge 21, 22, 23, 24, die lang gestreckt sind. Die Anlagefläche 27 ist flächig eben und weist zwei Bereiche auf, die auf den Vorderwandabschnitten 7, 8 aufliegen. Im Ausführungsbeispiel der Figuren 1 und 2 ist das Verbindungselement 18 so ausgerichtet, dass die Längsseiten 25, und somit auch die Längsachse L₃, parallel zu den Schienenlängsachsen L₁, L₂ sind. Die Haltevorsprünge 21, 22, 23, 24 sind paarweise am Grundkörper 26 angeordnet, d.h. jeweils zwei Haltevorsprünge 21, 22 bzw. 23, 24 sind an den Längsseiten 25 derart angeordnet, dass sie sich gegenüberliegen und den gleichen Abstand von den Breitseiten 28 des Grundkörpers 26 aufweisen. Dabei bilden die beiden Haltevorsprünge 21, 22, die an der ersten Montageschiene 1 anliegen, ein erstes Paar, während die Haltevorsprünge 23, 24, die an der zweiten Montageschiene 2 anliegen, ein zweites Paar bilden. Der Abstand a_{H} zwischen den Haltevorsprüngen 21, 22 des ersten Paares bzw. zwischen den Haltevorsprüngen 23, 24 des zweiten Paares ist größer als die lichte Weite a_{W} der Montageschlitze 13, 14. Der Abstand a_{H} zwischen den Haltevorsprüngen 21, 22 bzw. 23, 24 ist derart gewählt, dass die Haltevorsprünge 21, 22 des ersten Paares an den komplementären Anlagekonturen 19 der Seitenwände 5 der ersten Montageschiene 1, und die Haltevorsprünge 23, 24 des zweiten Paares an den komplementären Anlagekonturen 20 der Seitenwände 6 der zweiten Montageschiene 2 anliegen.

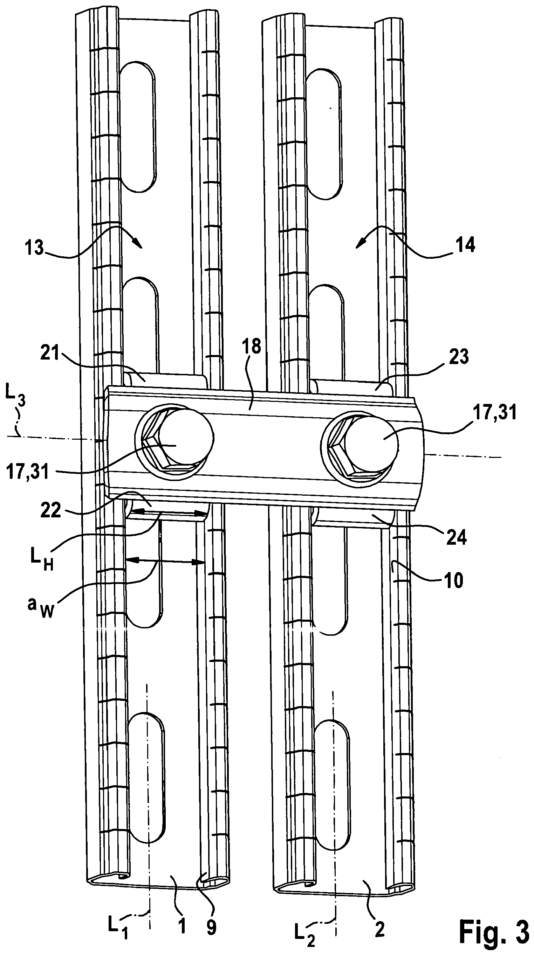

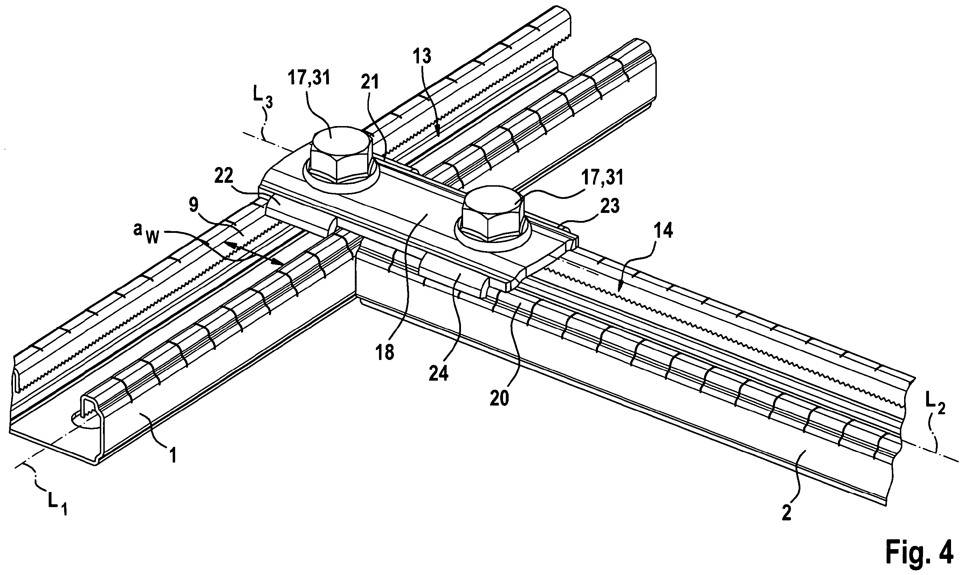

Die Haltevorsprünge 21, 22, 23, 24 weisen zudem eine Länge L_{H} in Richtung der Längsachse 3 auf, die gleich der lichten Weite a_{W} der Montageschlitze 13, 14 der Montageschienen 1, 2 ist. Somit können die Paare der Haltevorsprünge 21, 22 bzw. 23, 24 auch quer zu den Schienenlängsachsen L₁, L₂ in die Montageschlitze 13, 14 eingeführt werden, wie dies in den Figuren 3 und 4 zu sehen ist. Bei der in der Figur 3 dargestellten zweiten erfindungsgemäßen Befestigungsanordnung liegen die beiden Montageschienen 1, 2 parallel zueinander und das Verbindungselement 18 ist so angeordnet, dass das erste Paar Haltevorsprünge 21, 22 in den Montageschlitz 13 der ersten Montageschiene 1 eingreift und das zweite Paar Haltevorsprünge 23, 24 in den Montageschlitz 14 der zweiten Montageschiene 2. Dabei liegen die Haltevorsprünge 21, 22, 23, 24 an den Randabschnitten 9, 10 an, so dass ein Verdrehen des Verbindungselements 18 relativ zu den Montageschienen 1, 2 nicht mehr möglich ist. Die Montageschienen 1, 2 können auch orthogonal zueinander liegen, wie dies in der Figur 4 zu sehen ist. In diesem Fall greift das erste Paar Haltevorsprünge 21, 22 in den Montageschlitz 13 der ersten Montageschiene 1 ein, während das zweite Paar Haltevorsprünge 23, 24 außen an der zweiten Anlagekontur 19 der Seitenwände 6 der zweiten Montageschiene 2 aufliegt.

Da die Paare von Haltevorsprüngen 21, 22 bzw. 23, 24 einen Abstand a_{H} und eine Länge L_{H} aufweisen, die so gewählt sind, dass das Verbindungselement 18 drehfest mit den Montageschienen 1, 2 verbunden werden kann, können mit dem Verbindungselement 18 nicht nur Kräfte, sondern auch Momente zwischen den Montageschienen 1, 2 übertragen werden.

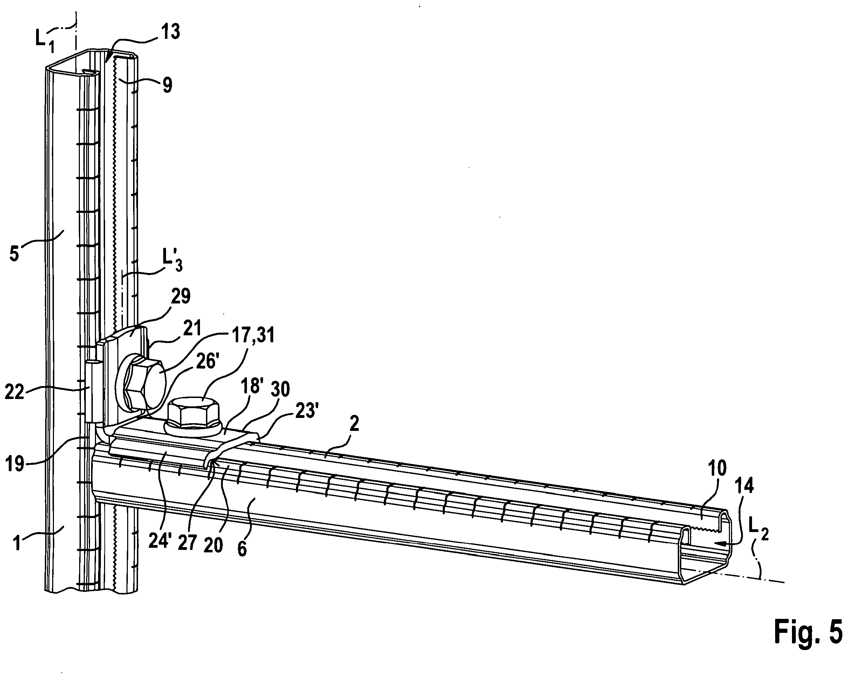

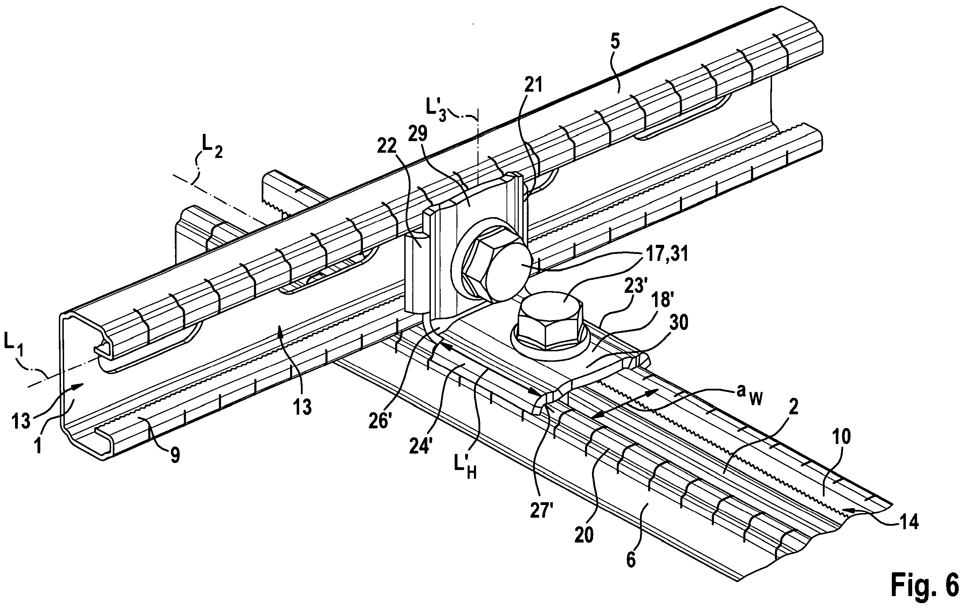

In den Figuren 5 und 6 sind erfindungsgemäße Befestigungsanordnungen dargestellt, die aus den bereits in den Figuren 1 bis 4 dargestellten Montageschienen 1, 2 und einem alternativen Verbindungselement 18' bestehen. Bei dem Verbindungselement 18' handelt es sich um einen Montagewinkel, dessen Grundkörper 26' zwei Winkelflächen 29, 30 aufweist, die unter 90° zueinander geneigt sind. Das erste Paar Haltevorsprünge 21, 22, das an der ersten Winkelfläche 29 angeordnet ist, ist gleich ausgebildet wie bei dem Verbindungselement 18 der Figuren 1 bis 4. Dieser Bereich definiert auch die Längsachse L₃' des Verbindungselements 18', entlang der sich die Winkelfläche 29 erstreckt. Bei der in der Figur 5 dargestellten Befestigungsanordnung liegen die Haltevorsprünge 21, 22 an der Anlagekontur 19 der ersten Montageschiene 1 an, wie dies bei der Befestigungsanordnung der Figur 1 der Fall ist, während in Figur 6 der Fall dargestellt ist, dass das erste Paar Haltevorsprünge 21, 22 in den Montageschlitz 13 der ersten Montageschiene 1 eingreift. Das zweite Paar Haltevorsprünge 23', 24' ist an der zweiten Winkelfläche 30 ausgebildet, die orthogonal zur Längsachse L₃' verläuft. Die Haltevorsprünge 23', 24' des zweiten Paares weichen von den Haltevorsprüngen 23, 24 des aus den Figuren 1 bis 4 bekannten Verbindungselements 18 dadurch ab, dass ihre Länge L'_{H} größer als die lichte Weite a_{W} der Montageschlitze 13, 14 ist, so dass die Anlagefläche 27' des Verbindungselements 18' vergrößert und eine noch stabilere Verbindung zwischen der zweiten Montageschiene 2 und dem Verbindungselement 18' möglich ist.

### Bezuaszeichenliste

### Befestigungsanordnung

- 1: erste Montageschiene
- 2: zweite Montageschiene
- 3: Rückwand der ersten Montageschiene 1
- 4: Rückwand der zweiten Montageschiene 2
- 5: Seitenwand der ersten Montageschiene 1
- 6: Seitenwand der zweiten Montageschiene 2
- 7: Vorderwandabschnitt der ersten Montageschiene 1
- 8: Vorderwandabschnitt der zweiten Montageschiene 2
- 9: Randabschnitt der ersten Montageschiene 1
- 10: Randabschnitt der zweiten Montageschiene 2
- 11: Aufnahmeraum der ersten Montageschiene 1
- 12: Aufnahmeraum der zweiten Montageschiene 2
- 13: Montageschlitz der ersten Montageschiene 1
- 14: Montageschlitz der zweiten Montageschiene 2
- 15: langlochartige Öffnung der ersten Montageschiene 1
- 16: langlochartige Öffnung der zweiten Montageschiene 2
- 17: Befestigungselement
- 18, 18': Verbindungselement
- 19: Anlagekontur der ersten Montageschiene 1
- 20: Anlagekontur der zweiten Montageschiene 2
- 21: erster Haltevorsprung
- 22: zweiter Haltevorsprung
- 23, 23': dritter Haltevorsprung
- 24, 24': vierter Haltevorsprung
- 25: Längsseite des Grundkörpers 26
- 26, 26': Grundkörper
- 27, 27': Anlagefläche
- 28: Breitseite des Grundkörpers 26
- 29: erste Winkelfläche
- 30: zweite Winkelfläche
- 31: Schraube
- 32: Hammerkopfmutter

- a_{H}: Abstand zwischen den Haltevorsprüngen 21, 22 bzw. 23, 24
- a_{W}: lichte Weite der Montageschlitze 13, 14
- d_{G}: Dicke des Grundkörpers 26
- d_{H}: Dicke der Haltevorsprünge 21, 22, 23, 24
- B_{G}: Breite des Grundkörpers 26
- L_{G}: Länge des Grundkörpers 26
- L_{H}: Länge der Haltevorsprünge 21, 22, 23, 24
- L'_{H}: Länge der Haltevorsprünge 23', 24'
- L₁: Schienenlängsachse der ersten Montageschiene 1
- L₂: Schienenlängsachse der zweiten Montageschiene 2
- L₃, L'₃: Längsachse des Verbindungselements 18, 18'

## Patentansprüche

1. Befestigungsanordnung mit einer ersten Montageschiene (1), einer zweiten Montageschiene (2) und einem Verbindungselement (18, 18') zum Verbinden der ersten Montageschiene (1) mit der zweiten Montageschiene (2),
wobei die Montageschienen (1, 2) jeweils zwei Seitenwände (5, 6) aufweisen, zwischen denen jeweils ein Montageschlitz (13, 14) ausgebildet ist, der sich jeweils entlang einer Schienenlängsachse (L₁, L₂) erstreckt,
wobei das Verbindungselement (18, 18') einen Grundkörper (26, 26') mit einer Anlagefläche (27, 27') zur Anlage an den Montageschienen (1, 2) aufweist, an dem Haltevorsprünge (21, 22, 23, 24, 23', 24') angeordnet sind, die über die Anlagefläche (27, 27') überstehen und das Verbindungselement (18, 18') gegen eine Verschiebung quer zu mindestens einem der Montageschlitze (13, 14) sichern,
**dadurch gekennzeichnet,**
**dass** die Haltevorsprünge (21, 22, 23, 24, 23', 24') paarweise am Grundköper (26, 26') angeordnet sind und mindestens ein erstes Paar bilden,
**dass** der Abstand (a_{H}) zwischen den Haltevorsprüngen (21, 22) des ersten Paares größer als die orthogonal zur Schienenlängsachse (L₁) der ersten Montageschiene (1) gemessene lichte Weite (a_{W}) des Montageschlitzes (13) der ersten Montageschiene (1) ist, und
**dass** die orthogonal zum Abstand (a_{H}) gemessene Länge (L_{H}) der Haltevorsprünge (21, 22) des ersten Paares gleich der lichten Weite (a_{W}) des Montageschlitzes (13) der ersten Montageschiene ist.

2. Befestigungsanordnung nach Anspruch 1, **dadurch gekennzeichnet, dass** ein zweites Paar Haltevorsprünge (23, 24, 23', 24') am Grundkörper (26, 26') angeordnet ist, und dass der Abstand (a_{H}) zwischen den Haltevorsprüngen (23, 24, 23', 24') des zweiten Paares größer als die orthogonal zur Schienenlängsachse (L₂) der zweiten Montageschiene (2) gemessene lichte Weite (a_{W}) des Montageschlitzes (14) der zweiten Montageschiene (2) ist.

3. Befestigungsanordnung nach Anspruch 1 oder 2, **dadurch gekennzeichnet, dass** ein zweites Paar Haltevorsprünge (23, 24) am Grundkörper angeordnet ist, und dass die orthogonal zu ihrem Abstand (a_{H}) gemessene Länge (L_{H}) der Haltevorsprünge des zweiten Paares (23, 24) gleich der orthogonal zur Schienenlängsachse (L₂) der zweiten Montageschiene (2) gemessenen lichten Weite (a_{W}) des Montageschlitzes (14) der zweiten Montageschiene (2) ist.

4. Befestigungsanordnung nach Anspruch 2 oder 3, **dadurch gekennzeichnet, dass** das erste Paar Haltevorsprünge (21, 22) außen an den Seitenwänden (5) der ersten Montageschiene (1) anliegt, und dass das zweite Paar Haltevorsprünge (23, 24, 23', 24') außen an den Seitenwänden (6) der zweiten Montageschiene anliegt.

5. Befestigungsanordnung nach Anspruch 2 oder 3, **dadurch gekennzeichnet, dass** das erste Paar Haltevorsprünge (21, 22) in den Montageschlitz (13) der ersten Montageschiene (1) eingreift, und dass das zweite Paar Haltevorsprünge (23, 24) in den Montageschlitz (14) der zweiten Montageschiene (2) eingreift.

6. Befestigungsanordnung nach Anspruch 2 oder 3, **dadurch gekennzeichnet, dass** das erste Paar Haltevorsprünge (21, 22) in den Montageschlitz (13) der ersten Montageschiene (1) eingreift, und dass das zweite Paar Haltevorsprünge (23, 24, 23', 24') außen an den Seitenwänden (6) der zweiten Montageschiene (2) anliegt.

7. Befestigungsanordnung nach einem der Ansprüche 1 bis 6, **dadurch gekennzeichnet, dass** der Grundkörper (26, 26') eine Anlagefläche (27, 27') aufweist, die flächig eben ist.

8. Befestigungsanordnung nach einem der Ansprüche 1 bis 7, **dadurch gekennzeichnet, dass** der Grundkörper (26') zwei zueinander geneigte Winkelflächen (29, 30) aufweist.

9. Befestigungsanordnung nach einem der Ansprüche 1 bis 8, **dadurch gekennzeichnet, dass** an mindestens einer Seitenwand (5, 6) eine zu mindestens einem der Haltevorsprünge (21, 22, 23, 24, 23', 24') komplementäre Anlagekontur (19, 20) ausgebildet ist.

## Claims

1. Fixing arrangement having a first mounting rail (1), a second mounting rail (2) and a connecting element (18, 18') for joining the first mounting rail (1) to the second mounting rail (2),
wherein the mounting rails (1, 2) each have two side walls (5, 6) between which there is formed a mounting slot (13, 14) which extends along a rail longitudinal axis (L₁, L₂), wherein the connecting element (18, 18') has a main body (26, 26') having a contact face (27, 27') for contact with the mounting rails (1, 2), on which main body there are arranged holding projections (21, 22, 23, 24, 23', 24') which project beyond the contact face (27, 27') and secure the connecting element (18, 18') against displacement transversely with respect to at least one of the mounting slots (13, 14),
**characterised in that**
the holding projections (21, 22, 23, 24, 23', 24') are arranged pairwise on the main body (26, 26') and form at least one first pair,
the spacing (a_{H}) between the holding projections (21, 22) of the first pair is greater than the inside width (aw) of the mounting slot (13) of the first mounting rail (1), measured orthogonally with respect to the rail longitudinal axis (L₁) of the first mounting rail (1), and
the length (L_{H}) of the holding projections (21, 22) of the first pair, measured orthogonally with respect to the spacing (a_{H}), is equal to the inside width (aw) of the mounting slot (13) of the first mounting rail.

2. Fixing arrangement according to claim 1, **characterised in that** a second pair of holding projections (23, 24, 23', 24') is arranged on the main body (26, 26'), and the spacing (a_{H}) between the holding projections (23, 24, 23', 24') of the second pair is greater than the inside width (aw) of the mounting slot (14) of the second mounting rail (2), measured orthogonally with respect to the rail longitudinal axis (L₂) of the second mounting rail (2).

3. Fixing arrangement according to claim 1 or 2, **characterised in that** a second pair of holding projections (23, 24) is arranged on the main body, and the length (L_{H}) of the holding projections of the second pair (23, 24), measured orthogonally with respect to their spacing (a_{H}), is equal to the inside width (aw) of the mounting slot (14) of the second mounting rail (2), measured orthogonally with respect to the rail longitudinal axis (L₂) of the second mounting rail (2).

4. Fixing arrangement according to claim 2 or 3, **characterised in that** the first pair of holding projections (21, 22) is in contact externally with the side walls (5) of the first mounting rail (1), and the second pair of holding projections (23, 24, 23', 24') is in contact externally with the side walls (6) of the second mounting rail.

5. Fixing arrangement according to claim 2 or 3, **characterised in that** the first pair of holding projections (21, 22) engages in the mounting slot (13) of the first mounting rail (1), and the second pair of holding projections (23, 24) engages in the mounting slot (14) of the second mounting rail (2).

6. Fixing arrangement according to claim 2 or 3, **characterised in that** the first pair of holding projections (21, 22) engages in the mounting slot (13) of the first mounting rail (1), and the second pair of holding projections (23, 24, 23', 24') is in contact externally with the side walls (6) of the second mounting rail (2).

7. Fixing arrangement according to any one of claims 1 to 6, **characterised in that** the main body (26, 26') has a contact face (27, 27') which is flat over its surface.

8. Fixing arrangement according to any one of claims 1 to 7, **characterised in that** the main body (26') has two angled faces (29, 30) which are inclined with respect to one another.

9. Fixing arrangement according to any one of claims 1 to 8, **characterised in that** on at least one side wall (5, 6) there is formed a contact contour (19, 20) complementary to at least one of the holding projections (21, 22, 23, 24, 23', 24').

## Revendications

1. Ensemble de fixation comprenant un premier rail de montage (1), un second rail de montage (2) et un élément de liaison (18, 18') conçu pour relier ledit premier rail de montage (1) audit second rail de montage (2),
les rails de montage (1, 2) étant respectivement munis de deux parois latérales (5, 6) entre lesquelles est pratiquée, à chaque fois, une fente de montage (13, 14) s'étendant respectivement le long d'un axe longitudinal (L₁, L₂) d'un rail,
l'élément de liaison (18, 18') comportant un corps de base (26, 26') pourvu d'une surface de contact (27, 27') destinée à venir en applique contre les rails de montage (1, 2), et sur lequel sont disposées des saillies de retenue (21, 22, 23, 24, 23', 24') qui dépassent au-delà de ladite surface de contact (27, 27') et interdisent un déplacement dudit élément de liaison (18, 18'), transversalement par rapport à au moins l'une des fentes de montage (13, 14),
**caractérisé par le fait**
**que** les saillies de retenue (21, 22, 23, 24, 23', 24') sont agencées par paires sur le corps de base (26, 26'), et forment au moins une paire ;
par le fait que l'espacement (a_{H}), séparant les saillies de retenue (21, 22) de la première paire, est supérieur à la largeur intérieure (a_{W}) de la fente de montage (13) du premier rail de montage (1), mesurée au droit de l'axe longitudinal (L₁) dudit premier rail de montage (1) ; et
par le fait que la longueur (L_{H}) desdites saillies de retenue (21, 22) de la première paire, mesurée au droit dudit espacement (a_{H}), est égale à ladite largeur intérieure (a_{W}) de ladite fente de montage (13) dudit premier rail de montage.

2. Ensemble de fixation selon la revendication 1, **caractérisé par le fait qu'**une seconde paire de saillies de retenue (23, 24, 23', 24') est disposée sur le corps de base (26, 26') ; et **par le fait que** l'espacement (a_{H}), séparant lesdites saillies de retenue (23, 24, 23', 24') de ladite seconde paire, est supérieur à la largeur intérieure (a_{W}) de la fente de montage (14) du second rail de montage (2), mesurée au droit de l'axe longitudinal (L₂) dudit second rail de montage (2).

3. Ensemble de fixation selon la revendication 1 ou 2, **caractérisé par le fait qu'**une seconde paire de saillies de retenue (23, 24) est disposée sur le corps de base ; et **par le fait que** la longueur (L_{H}) desdites saillies de retenue (23, 24) de la seconde paire, mesurée au droit de leur espacement (a_{H}), est égale à la largeur intérieure (a_{W}) de la fente de montage (14) du second rail de montage (2), mesurée au droit de l'axe longitudinal (L₂) dudit second rail de montage (2).

4. Ensemble de fixation selon la revendication 2 ou 3, **caractérisé par le fait que** la première paire de saillies de retenue (21, 22) est extérieurement en applique contre les parois latérales (5) du premier rail de montage (1) ; et **par le fait que** la seconde paire de saillies de retenue (23, 24, 23', 24') est extérieurement en applique contre les parois latérales (6) du second rail de montage.

5. Ensemble de fixation selon la revendication 2 ou 3, **caractérisé par le fait que** la première paire de saillies de retenue (21, 22) pénètre dans la fente de montage (13) du premier rail de montage (1) ; et **par le fait que** la seconde paire de saillies de retenue (23, 24) pénètre dans la fente de montage (14) du second rail de montage (2).

6. Ensemble de fixation selon la revendication 2 ou 3, **caractérisé par le fait que** la première paire de saillies de retenue (21, 22) pénètre dans la fente de montage (13) du premier rail de montage (1) ; et **par le fait que** la seconde paire de saillies de retenue (23, 24, 23', 24') est extérieurement en applique contre les parois latérales (6) du second rail de montage (2).

7. Ensemble de fixation selon l'une des revendications 1 à 6, **caractérisé par le fait que** le corps de base (26, 26') présente une surface de contact (27, 27') dont la superficie est plane.

8. Ensemble de fixation selon l'une des revendications 1 à 7, **caractérisé par le fait que** le corps de base (26') présente deux surfaces (29, 30) agencées en cornière et inclinées l'une par rapport à l'autre.

9. Ensemble de fixation selon l'une des revendications 1 à 8, **caractérisé par le fait qu'**un profil (19, 20) de venue en contact, complémentaire d'au moins l'une des saillies de retenue (21, 22, 23, 24, 23', 24'), est ménagé sur au moins une paroi latérale (5, 6).
